# EUROPEAN PATENT APPLICATION

(11) **EP 4 474 634 A1**
(43) Date of publication of application: **11.12.2024**
(21) Application number: 24178094.9
(22) Date of filing: 24.05.2024
(51) Int. Cl.: F02M 21/02

(54) **GAS FUEL INJECTOR**

(30) Priority: 06.06.2023 JP 2023093076
(71) Applicant: Nikki Co., Ltd., Atsugi, Kanagawa 243-0801 (JP)
(72) Inventor: MURAKAMI, Tsutomu, Atsugi, 243-0801 (JP); AIZAWA, Shutaro, Atsugi, 243-0801 (JP)
(74) Representative: Boult Wade Tennant LLP

(57) **Abstract**

An object of the present invention is to provide a normally-closed gas fuel injector that directly injects gas fuel into a cylinder of an engine by electromagnetic drive, in which airtightness at a time of closing valve can be secured for a long period of time.

A gas fuel injector (1) injecting gas fuel directly into a cylinder of an engine using electromagnetic driving force includes: a main body (10); an opening/closing valve (20); a solenoid (30); and a nozzle (40), in which the opening/closing valve (20) is a different component from the main body (10) and the nozzle (40) and includes: a valve body (21) fixed to a plunger (33) constituting the solenoid (30) and reciprocating in an axial direction together with the plunger (33); and a valve seat member (22) made of a resin material including a seat surface (23) contacting to or being separated from the valve body (21) and a valve hole (24) passing through a center of the seat surface (23).

## Description

### Technical Field

The present invention relates to a normally-closed gas fuel injector for injecting gas fuel of a flow rate required by an engine driven by gas fuel, such as hydrogen gas, LPG, and CNG, directly into a cylinder.

### Background Art

An electromagnetically driven injector that attracts a movable iron core by energizing and exciting an electromagnetic coil to open an opening/closing valve and injects fuel of a flow rate required by an engine into a cylinder is well known, and a valve seat member (seat member) constituting a valve structure together with a valve body of a needle valve or a ball valve is generally made of a metal material as described in, for example, JPH04-502947 A (Patent Literature 1) and JP 2018-091290 A (Patent Literature 2).

However, although a seat surface of the valve seat member made of the metal material as described above closely adheres to the valve body made of metal to secure an airtight state inside and outside the valve, since the seat surface is in contact with the valve body also made of metal, the seat surface has low adhesion due to contact between metals and, in addition, has a problem of durability in that the seat surface is deformed due to use over time to cause a decrease in airtightness at a time of closing the valve, thus leakage of the gas fuel is likely to occur.

Therefore, it may be conceivable to enhance the airtightness of the valve structure by forming the metal valve seat member from a resin material having a predetermined level of elastic deformability and excellent adhesion. However, in a case of an injector in which fuel is directly injected into a cylinder of an engine as described in Patent Literature 1, since the seat surface of the valve seat member is located in a vicinity of a fuel injection hole where the seat surface directly receives a thermal load due to combustion of the fuel, it is likely to be difficult to ensure durability of the valve seat member (seat surface) made of the resin material. As a countermeasure, although there is a method of sealing, for example, by providing a pump and applying a high hydraulic pressure to the seat portion, this is an expensive system that requires high costs for the pump.

On the other hand, since the injector as described in Patent Literature 2 has a certain distance between the fuel injection hole opened in the cylinder and the seat surface, it seems that the thermal load on the seat surface portion is smaller than that in Patent Literature 1. However, since the valve seat member itself having the seat surface is exposed in a state of being inserted into the cylinder of the engine, the valve seat member receives a thermal load in a wide area, thus deterioration and deformation are caused in the entire valve seat member when the valve seat member is made of the resin material, and it is difficult to secure the adhesion at the time of closing valve.

### Citation List

### Patent Literature

Patent Literature 1: JP H04-502947 A
Patent Literature 2: JP 2018-091290 A

### Summary of Invention

### Technical Problem

An object of the present invention is to solve the above problem, and to provide a normally-closed gas fuel injector that directly injects gas fuel into a cylinder of an engine by electromagnetic drive in which airtightness at a time of closing valve can be secured for a long period of time.

### Solution to Problem

In order to solve the above problem, the present invention provides a gas fuel injector injecting gas fuel directly into a cylinder of an engine using electromagnetic driving force.

The gas fuel injector includes: a cylindrical main body having a fuel passage formed inside; an opening/closing valve disposed inside the main body to open or close the fuel passage; a solenoid disposed inside the main body to open the opening/closing valve when being energized; and a nozzle disposed on a head of the main body located at a downstream side of the opening/closing valve that has an injection hole formed at a distal end and inserted into the cylinder.

The gas fuel injector is characterized in that the opening/closing valve is a different component from the main body and the nozzle, and the opening/closing valve includes: a valve body fixed to a plunger constituting the solenoid and reciprocating in an axial direction together with the plunger; and a valve seat member made of a resin material including a seat surface contacting to or being separated from the valve body and a valve hole passing through a center of the seat surface.

As described above, since the valve seat member is made of the resin material, it is easy to secure airtightness at the time of closing valve because of enhancing adhesion with the valve body by elastic deformability of the resin material and minimizing plastic deformation thereof. In addition, since the nozzle having the fuel injection hole at the distal end is provided on the downstream side of the valve hole as the different component from the valve seat member and the injector is mounted in a state where the distal end side is inserted into the cylinder of the engine, it is possible to reduce the thermal load transmitted from the inside of the cylinder of the engine to the valve seat member while providing a predetermined distance between the valve seat made of synthetic resin and the fuel injection hole. Thus, it is easy to secure airtightness at the time of closing valve for a long period.

In the present invention, the valve seat member may be incorporated in the head of the main body in a state of being separated from the nozzle, which allows the valve seat member made of the resin material to be less likely to receive the thermal load conducted from the nozzle having a high temperature in the cylinder of the engine.

In the present invention, the plunger may be fixed to a spring guide disposed at a proximal end side of the main body located at an upstream side of the opening/closing valve, the spring guide may be disposed between a first coil spring biasing the plunger in a closing valve direction and a second coil spring biasing the plunger in an opening valve direction, and a biasing force of the first coil spring may be set to be larger than a biasing force of the second coil spring. Such structure enables the solenoid to be accurately and stably configured because even if the first coil spring to be set to a set length and acting as a return spring has variation in its characteristics and cannot be set to a certain load, it is possible to correct the varied load using the second coil spring.

### Advantageous Effects of Invention

According to the present invention, it is possible to provide the gas fuel injector using the valve seat member made of the resin material capable of securing airtightness at the time of closing valve for a long period of time.

### Brief Description of Drawings

FIG. 1 is a longitudinal sectional view illustrating a closing valve state in an embodiment of a gas fuel injector of the present invention; and
FIG. 2 is a longitudinal sectional view illustrating an opening valve state in the embodiment in FIG. 1.

### Description of Embodiments

Hereinafter, an embodiment of the present invention will be described with reference to the drawings. Note that, in the present description, gas fuel refers to fuel that is supplied to an engine in a gas state and burned, such as LPG, CNG, LNG, and hydrogen gas.

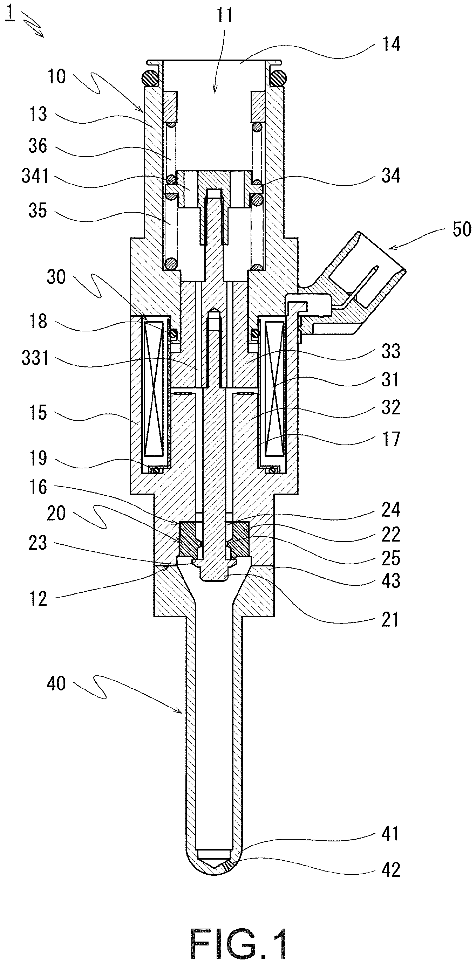

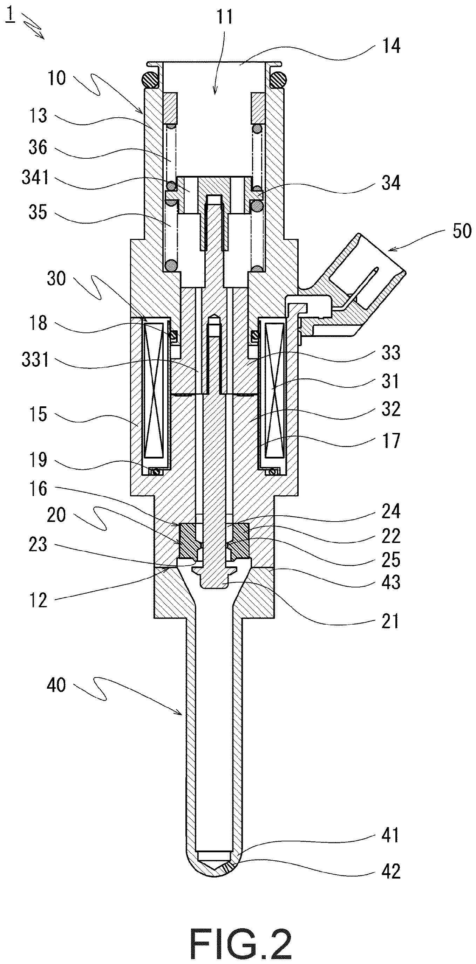

FIG. 1 is a longitudinal sectional view illustrating a closing valve state in the embodiment of the gas fuel injector of the present invention, and FIG. 2 is a longitudinal sectional view illustrating an opening valve state of the gas fuel injector.

A gas fuel injector 1 includes an opening/closing valve 20 that opens or closes a fuel passage 11 and a solenoid 30 that opens the opening/closing valve 20 when being energized in a cylindrical main body 10 having the fuel passage 11 formed inside, further includes a nozzle 40 having a fuel injection hole 42 formed at a distal end 41 at a head 12 of the main body 10, and is a device for supplying gas fuel decompressed and adjusted to a predetermined pressure at a flow rate required by an engine.

When used, a fixed iron core 32 attracts the plunger 33 by energizing and exciting an electromagnetic coil 31 of the solenoid 30 to open the opening/closing valve 20 so that the gas fuel is directly injected from the fuel injection hole 42 into a cylinder of the engine.

The main body 10 includes a cylindrical inlet body 13 having a fuel inlet 14 and a cylindrical outlet body 15 having a valve seat member holding part 16, and is formed of a magnetic material such as metal. A collar member 17 for positioning and sealing used in combination with O-rings 18 and 19 is provided inside the inlet body 13 and the outlet body 15.

The opening/closing valve 20 is formed as a different component from the main body 10 and the nozzle 40, and includes a valve body 21 fixed to the plunger 33 and reciprocating in an axial direction together with the plunger 33, and a valve seat member 22 made of resin material that is held by the valve seat member holding part 16 and has a seat surface 23 contacting to or being separated from the valve body 21 and a valve hole 24 passing through a center of the seat surface 23. In addition, an orifice 25 for flow rate measurement having a smaller diameter than both ends of the valve hole 24 is formed in the middle of the valve hole 24 of the valve seat member 22.

The solenoid 30 includes the electromagnetic coil 31, the fixed iron core 32 located inside the electromagnetic coil 31, the plunger 33 (movable iron core) provided to face the fixed iron core 32, a spring guide 34, a first coil spring 35, and a second coil spring 36, and all components constituting the solenoid 30 are coaxially arranged.

The fixed iron core 32 is constituted by a cylindrical boss portion which is a part of the outlet body 15 made of the magnetic material.

The plunger 33 is fixed to a spring guide 34 disposed at a proximal end side of the main body 10 located at an upstream side of the opening/closing valve 20, the spring guide 34 is disposed between a first coil spring 35 biasing the plunger 33 in a closing valve direction (upward direction in FIG. 1) and a second coil spring 36 biasing the plunger 33 in an opening valve direction (downward direction in FIG. 1), a biasing force of the first coil spring 35 is set to be larger than a biasing force of the second coil spring 36 so that the opening/closing valve 20 is closed when the solenoid 30 is not energized, and such structure configures so called normally-closed injector.

Next, operation of the solenoid 30 will be described. When electric current is supplied to the electromagnetic coil 31 through a connector 50 electrically connected to the electromagnetic coil 31 (when energized), the fixed iron core 32 generates magnetic field, and the fixed iron core 32 attracts the plunger 33.

When the electric current supply to the electromagnetic coil 31 is stopped (when not energized), the magnetic field of the fixed iron core 32 vanishes and an attracting force of the fixed iron core 32 to the plunger 33 is released, the spring guide 34 fixed to the plunger 33 moves in the closing valve direction by the biasing force of the first coil spring 35, and the movement of the plunger 33 cause the valve body 21 to move in the closing valve direction, thus the valve body 21 and the seat surface 23 come into close contact with each other and the valve is closed.

At this time, the structure combining the first coil spring 35 and the second coil spring 36 arranged with the spring guide 34 interposed therebetween enables the solenoid 30 to be accurately and stably configured because even if the first coil spring 35 to be set to a set length and acting as a return spring has variation in its characteristics and cannot be set to a certain load, it is possible to correct the varied load using the second coil spring 36.

An opening valve operation of the solenoid 30 causes the gas fuel introduced from the fuel inlet 14 of the inlet body 13 to pass through the fuel passage 11, to pass through a through hole 341 formed in the spring guide 34 and a through hole 331 formed in the plunger 33, to pass through the opened valve hole 24, and to be directly injected into the cylinder of the engine from the fuel injection hole 42 opened at the distal end 41 of the nozzle 40.

As described above, in the conventional gas fuel injector, since the valve seat member and the valve body constituting the opening/closing valve are in surface contact between the metals, the adhesion strength of a contact portion is not high and plastic deformation is likely to occur in the contact portion due to aged use, thus there is a problem that it is difficult to ensure airtightness inside and outside the injector when the valve is closed.

Therefore, according to the gas fuel injector 1 of the present invention, the electromagnetically driven gas fuel injector 1 that directly injects the gas fuel into the cylinder of the engine through the valve hole 24 opened at the center of the seat surface 23 of the valve seat member 22 adopts a configuration in which the valve seat member 22 is made of the resin material, the valve body 21 made of the metal material and the seat surface 23 made of the resin material are configured to contact to or to be separated from each other, the nozzle 40 having the fuel injection hole 42 opened at the distal end 41 is provided on the downstream side of the valve hole 24 as a different component from the valve seat member 22, and the distal end 41 side of the nozzle 40 is inserted into the cylinder of the engine.

As described above, since the resin material having higher elastic deformability than the metal material is adopted as the material of the valve seat member 22 having the seat surface 23, it is possible to minimize the plastic deformation of both the seat surface 23 and the valve body 21 at the contact portion of the valve structure while improving adhesion with the valve body 21 by the elastic deformability, and it is easy to secure high airtightness at the time of closing valve for a long period of time.

In addition, in the present invention, a configuration is adopted in which the nozzle 40 having the fuel injection hole 42 is provided at the head 12 of the outlet body 15 as the different component from the valve seat member 22, the distal end 41 side of the nozzle 40 is mounted so as to be inserted into the cylinder of the engine, and a large distance is provided between the distal end 41 where the fuel injection hole 42 is formed and the proximal end 43 in contact with the head 12 of the outlet body 15 in the nozzle 40. The configuration enables to greatly reduce the load level received by the valve seat member 22 due to heat transferred from the cylinder of the engine having high temperature while providing a predetermined distance from the valve seat member 22 and seat surface 23, which are made of the resin material having low heat resistance, to the fuel injection hole 42, and enables to minimize thermal denaturation and deterioration of the valve seat member 22, thus airtightness at the time of closing valve can be ensured for a longer period of time.

Furthermore, the present embodiment is also characterized in that the valve seat member 22 is incorporated in the valve seat member holding part 16 which is a recess formed in the outlet body 15 of the main body 10 in a state where the valve seat member 22 is not in contact with the nozzle 40. That is, although it is preferable that the nozzle 40 which is inserted into the cylinder of the engine and exposed to the high temperature is made of the metal material having excellent heat resistance, alternatively a structure is adopted in which heat through the nozzle 40 made of the metal material having a high thermal conductivity is hardly directly transferred to the valve seat member 22 made of the resin material.

As described above, according to the present invention, the normally-closed gas fuel injector that directly injects gas fuel into the cylinder of the engine by electromagnetic drive enables to secure the airtightness at the time of closing valve for a long period of time.

### Reference Signs List

- 1: gas fuel injector
- 10: main body
- 11: fuel passage
- 12: head
- 13: inlet body
- 14: fuel inlet
- 15: outlet body
- 16: valve seat member holding part
- 17: collar member
- 18, 19: O-ring
- 20: opening/closing valve
- 21: valve body
- 22: valve seat member
- 23: seat surface
- 24: valve hole
- 25: orifice
- 30: solenoid
- 31: electromagnetic coil
- 32: fixed iron core
- 33: plunger
- 34: spring guide
- 35: first coil spring
- 36: second coil spring
- 40: nozzle
- 41: distal end
- 42: fuel injection hole
- 43: proximal end
- 50: connector
- 331, 341: through hole
- C: cylinder
- E: engine

## Claims

1. A gas fuel injector (1) injecting gas fuel directly into a cylinder of an engine using electromagnetic driving force, the gas fuel injector (1) comprising:
a cylindrical main body (10) having a fuel passage (11) formed inside;
an opening/closing valve (20) disposed inside the main body (10) to open or close the fuel passage (11);
a solenoid (30) disposed inside the main body (10) to open the opening/closing valve (20) when being energized; and
a nozzle (40) disposed on a head (12) of the main body (10) located at a downstream side of the opening/closing valve (20), the nozzle (40) having an injection hole (42) formed at a distal end (41) and inserted into the cylinder,
**characterized in that** the opening/closing valve (20) is a different component from the main body (10) and the nozzle (40), and the opening/closing valve (20) includes: a valve body (10) fixed to a plunger (33) constituting the solenoid (30) and reciprocating in an axial direction together with the plunger (33); and a valve seat member (22) made of a resin material including a seat surface (23) contacting to or being separated from the valve body (21) and a valve hole (24) passing through a center of the seat surface (23).

2. The gas fuel injector (1) according to claim 1, wherein the valve seat member (22) is incorporated in the head (12) of the main body (10) in a state of being separated from the nozzle (40).

3. The gas fuel injector (1) according to claim 1, wherein
the plunger (33) is fixed to a spring guide (34) disposed at a proximal end (43) side of the main body (10) located at an upstream side of the opening/closing valve (20),
the spring guide (34) is disposed between a first coil spring (35) biasing the plunger (33) in a closing valve direction and a second coil spring (36) biasing the plunger (33) in an opening valve direction, and
a biasing force of the first coil spring (35) is set to be larger than a biasing force of the second coil spring (36) so that the opening/closing valve (20) is closed when the solenoid (30) is not energized.
